# EUROPÄISCHE PATENTSCHRIFT

(11) **EP 0 650 978 B1**
(45) Veröffentlichungstag und Bekanntmachung des Hinweises auf die Patenterteilung: **04.10.2001**
(21) Anmeldenummer: 94116762.9
(22) Anmeldetag: 25.10.1994
(51) Int. Cl.: C08F 8/00, C09D 5/03, C09D 133/04

(54) **Radikalisch vernetzbare Copolymerisate**
Radically cross-linkable copolymers
Copolymères réticulables par radicaux

(30) Priorität: 03.11.1993 DE 4337481
(43) Veröffentlichungstag der Anmeldung: 03.05.1995
(73) Patentinhaber: BASF Aktiengesellschaft, 67063 Ludwigshafen (DE)
(72) Erfinder: Kempter, Fritz-Erdmann, Dr., D-68161 Mannheim (DE); Reich, Wolfgang, Dr., D-96476 Rodach (DE); Jäger, Ulrich, Dr., D-67376 Harthausen (DE); Korona, Eckhard, D-67434 Neustadt (DE)

(56) Entgegenhaltungen:
- WO-A-91/19888
- DE-A- 2 240 312
- DE-A- 2 336 517
- DE-A- 2 436 186
- US-A- 4 064 161

## Beschreibung

Die vorliegende Erfindung betrifft ein Verfahren zur Herstellung von Pulvern für Überzüge, welche durch UV-Strahlen gehärtet werden, aus radikalisch vernetzbaren Copolymerisaten mit einem zahlenmittleren Molekulargewicht von 1500 bis 6000 und einer Molekulargewichtsverteilung entsprechend einer Polydispersität von 1 bis 4,0, dadurch gekennzeichnet, daß
A) ein Copolymerisat (A), welches aus
   a4) 50 bis 85 mol-% eines Monomeren (a1) mit dem Strukturelement der Methacrylsäure und
   a2) 15 bis 50 mol-% eines sonstigen radikalisch polymerisierenden Monomeren (a2), wobei
   a3) 5 bis 50 mol-% der Gesamtmenge der Monomeren (a1) und (a2) funktionelle Gruppen tragende Monomeren (a3) sind, deren funktionelle Gruppen zu einer Kondensations- oder Additionsreaktion befähigt sind,
   aufgebaut ist, durch radikalische Substanz- oder Lösungspolymerisation bei 140 bis 210°C und einer mittleren Verweilzeit von 2 bis 90 min hergestellt wird und
   mit
B) einem olefinisch ungesättigten Monomeren (B), welche eine funktionelle Gruppe trägt, die zu der der Monomeren (a3) komplementär ist, polymeranalog umgesetzt wird.

Aus der US-A 4 064 161 sind Copolymerisate mit einem kleinen Molekulargewicht und einer engen Molekulargewichtsverteilung bekannt, die als strahlenhärtbare Pulverbindemittel verwendet werden können. Nach den dortigen Herstellvorschriften werden sie durch anionische Polymerisation von Alkylestern der Methacrylsäure erhalten, wobei die Alkylgruppen zu einem gewissen Anteil funktionelle Gruppen, z.B. Glycidylgruppen, tragen. In einem zweiten Schritt werden diese Copolymerisate polymeranalog mit funktionelle Gruppen tragenden olefinisch ungesättigten Monomeren, z.B. Acrylsäure, zu Vinylgruppen tragenden Copolymerisaten umgesetzt, welche olefinisch ungesättigte Gruppen als funktionale Gruppen tragen.

Die DE-A 24 36 186 betrifft durch UV-Strahlung härtbare Pulverbindemittel, die aus Vinyl- und Acrylpolymeren mit polymerisierbaren ungesättigten Bindungen an den Seitenketten bestehen. Durch radikalische Lösungsmittelpolymerisation wird aus Styrol als Hauptmonomeren, Ethylacrylat und Glycidylmethacrylat ein Copolymerisat hergestellt, das anschließend mit Acrylsäure polymeranalog umgesetzt wird.

Die an die durch UV-Strahlung härtbaren Pulverbindemittel gestellten vielfältigen, zum Teil divergierenden Anforderungen hinsichtlich der Verarbeitungseigenschaften und der Gebrauchseigenschaften der damit hergestellten Lacküberzüge werden von den bisher bekannten Polymerisaten nicht zufriedenstellend erfüllt.

Die Pulver sollen frei rieselbar bleiben, wenn sie bei Herstellung, Lagerung und Transport einer erhöhten Temperatur bis ca. 50°C ausgesetzt sind. Diese Eigenschaft wird auch als Block-festigkeit bezeichnet. Andererseits soll jedoch die Einbrenntemperatur, bei der die Pulver zuerst verfilmt und unmittelbar anschließend durch UV-Bestrahlung vernetzt werden, möglichst niedrig liegen, damit die Bindemittel auch zur Beschichtung von hitzempfindlichen Substraten verwendet werden können. Eine schnelle Verfilmung in einem engen Temperaturintervall setzt bekanntermaßen ein relativ geringes, jedoch möglichst einheitliches Molekulargewicht des Polymeren voraus. Die bisher bekannten Pulverlackbindemittel lassen insoweit noch zu wünschen übrig.

Der Erfindung lag daher die Aufgabe zugrunde, diesen Mängeln, vor allem im Falle der durch UV-Strahlen härtbaren Pulverlackbindemittel, abzuhelfen.

Demgemäß wurde das eingangs definierte Verfahren gefunden.

Die Copolymerisate werden in zwei Schritten aufgebaut, da die zur Strahlungshärtung benötigten ungesättigten Gruppen unter den Bedingungen der Hauptkettenpolymerisation nicht beständig wären. Zunächst wird in einer Copolymerisation aus den Monomeren (a1) bis (a3) ein Copolymerisat (A) hergestellt, das reaktive Gruppen trägt, über die es in einer anschließenden polymeranalogen Reaktion zu dem erfindungsgemäßen umgesetzt werden kann. Hierzu werden als Monomeren (a1) und (a2) solche mitverwendet (Monomeren (a3)), die neben der olefinischen Doppelbindung zusätzliche reaktive Gruppen tragen, die unter den Bedingungen der Copolymerisation inert sind. Die Copolymerisate (A) werden in einem zweiten Schritt mit solchen Vinylverbindungen (B) umgesetzt, die zusätzlich noch Funktionalitäten aufweisen, die mit den reaktiven Gruppen des Copolymerisates (A) unter Ausbildung chemischer Bindungen reagieren.

Das zahlenmittlere Molekulargewicht Mₙ der erfindungsgemäßen Polymerisate liegt zwischen 1500 und 6000, insbesondere zwischen 2000 und 4000.

Die Polydispersität M_{w}/Mₙ, der Quotient aus dem zahlenmittleren und dem gewichtsmittleren Molekulargewicht der Copolymerisate, stellt ein Maß für die Molekulargewichtsverteilung der Copolymerisate dar und hat im Idealfall den Wert 1, jedoch genügen für die Praxis auch Werte unter 4,0, insbesondere unter 3,5.

Die Angaben zur Polydispersität sowie zum zahlenmittleren und gewichtsmittleren Molekulargewicht Mₙ und M_{w} beziehen sich hier auf gelpermeationschromatographische Messungen, wobei Polystyrol als Standart verwendet wurde. Die Methode ist im Analytiker Taschenbuch Bd. 4, Seiten 433 bis 442 , Berlin 1984 beschrieben.

Das Molekulargewicht und die Molekulargewichtsverteilung der erfindungsgemäßen Copolymerisate werden durch die Polymerisationsbedingungen bei der Herstellung der Copolymerisate (A) bestimmt.

Die Bildung von Copolymerisaten (A) mit geringer Polydispersität und niedrigem Molekulargewicht ist besonders begünstigt, wenn Reaktionstemperaturen von 140 bis 210 bevorzugt von 150 bis 180 und besonders bevorzugt von 150 bis 170°C sowie Reaktionszeiten von 2 bis 90 bevorzugt von 5 bis 25 und besonders bevorzugt von 10 bis 15 Minuten gewählt werden.

Falls Monomeren oder Lösungsmittel mitverwendet werden, deren Siedepunkte unterhalb der Reaktionstemperatur liegen, ist die Reaktion zweckmäßigerweise unter Druck, vorzugsweise unter dem Eigendruck des Systems durchzuführen. Höhere Drücke als 30 bar sind in der Regel jedoch nicht erforderlich.

Derartige Polymerisationsbedingungen lassen sich vor allem in einem Ringspalt-Dünnschichtreaktor mit Rückführungseinrichtung aufrecht erhalten, da hier die exotherme Polymerisation wegen des günstigen Verhältnisses von Wärmeaustauschfläche zu Reaktionsvolumen unter weitgehend isothermen Bedingungen durchführbar ist.

Copolymerisationen in Ringspalt-Dünnschichtreaktoren sind z.B. in der DE-A 4 203 277 und DE-A 4 203 278 beschrieben. Sie sind allgemein bekannt und können z.B. in der Art eines mit einem Rotor ausgestatteten Rohrreaktors ausgeführt werden und sind z.B. von der Fa. Buss SMS GmbH Verfahrenstechnik erhältlich. Sie sind vorzugsweise mit einer Vorrichtung ausgestattet, mit dem ein Teil des Produktes an den Reaktoreintritt zurückgeführt werden kann.

Andere Polymerisationsapparate, z.B. Rührkessel, kommen ebenfalls in Betracht, sofern für eine ausreichende Wärmeabfuhr gesorgt wird.

Man kann die Polymerisation in Substanz ausführen, jedoch ist die Lösungspolymerisation wegen der geringen Viskosität der entstehenden Polymerlösungen im allgemeinen zu bevorzugen. Die Menge der Lösungsmittel beträgt im allgemeinen 0 bis 30, vorzugsweise 10 bis 25 Gew.-%, bezogen auf die Gesamtmenge der eingesetzten Monomeren.

Als Lösungsmittel eignen sich alle Flüssigkeiten, die sich gegenüber den Reaktionspartnern inert verhalten, also beispielsweise Ether wie Ethylenglycolether und Ethylendiglycolether, Ester wie Butylacetat und Ketone wie Methylamylketon. Besonders vorteilhaft werden regelnde Lösungsmittel verwendet wie Alkylaromaten, z.B. Toluol, Xylole und besonders Cumol und m-Xylol sowie aliphatische Alkohole, z.B. Isopropanol.

Es empfiehlt sich meistens, den Umsatz auf 50 bis 95, vorzugsweise 80 bis 90 mol-% zu begrenzen, da man auf diese Weise engere Molekulargewichtsverteilungen erzielt. Nicht umgesetzte Monomere sowie flüchtige Oligomere und das Lösungsmittel werden nach üblicher destillativer Abtrennung vom Polymeren zweckmäßigerweise wieder in die Polymerisation zurückgeführt.

Als Polymerisationsinitiatoren eignen sich vor allem solche radikalbildenden Verbindungen, deren Zerfallstemperatur bei 140 bis 200°C liegt, also beispielsweise Di-tert.-butylperoxid und Dibenzoylperoxid.

Die Menge der Initiatoren beträgt vorzugsweise 0,5 bis 10, besonders bevorzugt 1 bis 5 mol-% der Gesamtmenge der eingesetzten Monomeren.

Bezüglich der stofflichen Zusammensetzung der Copolymerisate (A) ist zu betonen, daß es unabhängig von der Art des restlichen Molekülteils auf den verhältnismäßig hohen Anteil der Monomeren (a1) mit dem Strukturelement 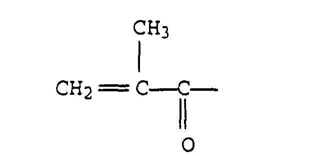 der Methacrylsäure ankommt und daß es prinzipiell keine Rolle spielt, welchem Monomerentyp (a1) bis (a2) die Monomeren (a3) mit den funktionellen Gruppen angehören. Zum Monomerentyp (a1) zählen somit Monomeren mit nicht-reaktionsfähigen Resten und solche vom Typ (a3). Im folgenden werden zunächst die erstgenannten Monomeren und danach die Monomeren (a3) mit den funktionellen Gruppen näher erläutert.

Bei den Monomeren (a1) sind in erster Linie die C₁- bis C₁₂-Alkylester der Methacrylsäure zu nennen, beispielsweise Ethylmethacrylat, 2-Ethylhexylmethacrylat und n-Butylmethacrylat sowie vor allem Methylmethacrylat.

Ferner kommen Methoxyethylmethacrylat, Cyclohexylmethacrylat und Benzylmethacrylat in Betracht.

Als Monomeren (a2) kommen grundsätzlich alle radikalisch polymerisierbaren Monomeren in Betracht.

Von besonderer Bedeutung sind die Alkylester der Acrylsäure. Beispiele für weitere gut geeignete Monomeren dieser Art sind iso-, n- und tert-Butylacrylat.

Weiterhin kommen außer Styrol und 1-Methylstyrol beispielsweise 4-tert.-Butylstyrol und 2-Chlorstyrol besonders in Betracht.

Als weitere radikalisch polymerisierbare Monomeren (a2) seien Vinylether von C₂- bis C₂₀-Fettsäuren, wie vor allem Vinylacetat und Vinylpropionat, Vinylhalogenide wie Vinylchlorid und Vinylidenchlorid, konjugierte Diene wie Butadien und Isopren, Vinylether von C₁- bis C₂₀-Alkanolen, z.B. Vinyl-iso-butylether, Acrylnitril, Methacrylnitril und die C₁- bis C₁₀-Alkylester der Crotonsäure und der Maleinsäure genannt. Ferner sind heterocyclische Vinylverbindungen wie 2-Vinylpyridin und N-Vinylpyrrolidon geeignet.

Die Monomeren (a3), die jeder der Klassen (a1) und (a2) angehören können, tragen funktionelle Gruppen, durch die in einer Kondensations- oder Additionsreaktion mit einer eine komplementäre Gruppe tragenden Vinylverbindung (B) die gewünschte Funktionalisierung der Copolymerisate (A) zum erfindungsgemäßen Copolymerisat erfolgen kann. Solche funktionellen Gruppen sind z.B. die Hydroxylgruppe, die Carbonamidgruppe, die Aminogruppe, die Carbonylgruppe in Aldehyd- oder Ketonfunktion, die Isocyanatgruppe und vor allem die Carboxylgruppe und die Epoxigruppe.

Entsprechende Monomere sind in erster Linie die relativ preiswerten Verbindungen 2-Hydroxyethylacrylat und -methacrylat, Allylalkohol, 2-Aminoethylacrylat und -methacrylat, Acrolein, Methacrolein und Vinylethylketon, Acrylamid und Methacrylamid, Vinylisocyanat, Methacryloylisocyanat, Dimethyl-3-isopropenylbenzylisocyanat (TMI) und 4-Isocyanatostyrol sowie vor allem Acrylsäure, Methacrylsäure, Crotonsäure, Maleinsäure und deren Anhydride sowie Glycidylacrylat und Glycidylmethacrylat.

Die Polymerisate (A) sind zu 50 bis 85 mol-%, bevorzugt 60 bis 85 mol-% aus einem oder mehreren der Monomeren (a1) und zu 15 bis 50 mol-%, bevorzugt 15 bis 40 mol-% aus einem oder mehreren der Monomeren (a2) aufgebaut.

Der Anteil eines oder mehrerer der Monomeren (a3) an der Gesamtmenge der Monomeren (a1) und (a2) beträgt 5 bis 50 mol-%, bevorzugt 15 bis 40 mol-%, besonders bevorzugt 20 bis 35 mol-%.

Bei Umsätzen von weniger als 100% wird die gewünschte Zusammensetzung des Polymerisates (A) selten der der eingesetzten Monomerenmischung entsprechen, weil die Monomeren mit unterschiedlicher Geschwindigkeit polymerisieren. In solchen Fällen ist es erforderlich, den Anteil der jeweiligen Monomeren an dem Monomerengemisch entsprechend ihrer Reaktionsgeschwindigkeit anzupassen. Diese Anpassung kann beispielsweise so erfolgen, daß man die Zusammensetzung der nicht umgesetzten abdestillierten Monomerenmischung analysiert und so auf die Zusammensetzung des Copolymerisates (A) zurückschließt. Grundsätzlich wird es beispielsweise erforderlich sein, den Anteil der Methacrylsäurederivate relativ hoch zu wählen und den der sonstigen Monomeren zu erniedrigen.

Demgemäß enthalten die Monomerenmischungen üblicherweise 60 bis 95 mol-%, bevorzugt 65 bis 90 mol-% eines oder mehrere der Monomeren (a1) und 5 bis 40 mol-%, bevorzugt 10 bis 35 mol-% eines oder mehrere der Monomeren (a2).

Der Anteil eines oder mehrerer der Monomeren (a3) an der Gesamtmenge der eingesetzten Monomeren (a1) und (a2) beträgt 5 bis 50 mol-%, bevorzugt 15 bis 40 mol-%, besonders bevorzugt 20 bis 35 mol-%.

Vorzugsweise befreit man die Copolymerisate (A) im Anschluß an ihre Herstellung destillativ vom Lösungsmittel und von überschüssigen Monomeren und entfernt die verbleibenden geringen Mengen an Restmonomeren und flüchtigen Oligomeren bei vermindertem Druck oder Durchleiten von Stickstoff durch die Schmelze.

Hierzu ist auf Grund der hohen Glasübergangstemperaturen der Polymerisate und der zum Teil hohen Siedepunkte der Monomeren ein kontinuierlich betriebener Dünnschichtverdampfer besonders gut geeignet, in welchem das Copolymerisat vorzugsweise bei Temperaturen von 180 bis 220°C oberhalb der Polymerisationstemperatur entgast wird.

Um die radikalisch vernetzbaren Polymerisate zu erhalten, werden die Polymerisate (A) in einer polymeranalogen Umsetzung derivatisiert. Sie werden mit solchen funktionellen olefinisch ungesättigten Monomeren (B), im folgenden als Vinylmonomeren B bezeichnet, umsetzt, deren funktionelle Gruppen sich zu denen des Polymerisates komplementär verhalten. Als derartige funktionelle Gruppen tragende Vinylmonomeren (B) kommen dieselben Verbindungen in Betracht wie die bereits genannten Monomeren (a3). Aus der Gruppe der Vinylmonomeren (a3) bzw. (B) kann nun ein komplementäres Paar ausgewählt werden, dessen funktionelle Gruppen in einer Kondensations- oder Additionsreaktion miteinander reagieren können. Der eine Partner wird bei der Copolymerisation zum Aufbau des Polymerisates (A) verwendet, der andere dient als Reaktand in der polymeranalogen Umsetzung. Geeignet sind hier Paare wie Methacryloylisocyanat/Hydroxyalkylmethacrylat, Hydroxyalkylmethacrylat/Methacrylsäureanhydrid und Hydroxyalkylmethacrylat/Methacryloylchlorid. Bevorzugt ist vor allem die Kombination Glycidylmethacrylat oder Glycidylacrylat mit Methacrylsäure oder Acrylsäure.

Eine weitere Möglichkeit, zu den radikalisch vernetzbaren Polymerisaten zu gelangen, besteht darin, die gegebenenfalls im Copolymerisat (A) enthaltenen Estergruppen partiell zu hydrolysieren und die entstandenen Carboxylgruppen anschließend mit Glycidylmethacrylsäureestern oder Glycidylacrylsäureestern umzusetzen.

Die polymeranaloge Umsetzung der Polymerisate (A) mit den hierzu komplementären monomeren funktionellen Vinylverbindungen (B) zu den erfindungsgemäßen radikalisch vernetzbaren, Vinylgruppen tragenden Polymerisaten erfolgt bevorzugt in einem Reaktionsextruder. Die Reaktionstemperaturen betragen 80 bis 150°C, bevorzugt 90-140°C, besonders bevorzugt 100-130°C, die Verweilzeiten 3 bis 20 Minuten und der Umsatz 50-100 %.

Als Katalysatoren kommen alle diejenigen in Betracht, die üblicherweise zur Beschleunigung der Reaktion zwischen den komplementären Gruppen eingesetzt werden. Für das Reaktionspaar Epoxid/Carbonsäure sind beispielsweise Phosphine wie Triphenylphosphin sowie Amine wie Dimethylbenzylamin, Dimethylethanolamin und Tributylamin sowie Tetraalkylammoniumhalogenide und für das Reaktonspaar Isocyanat/Alkohol beispielsweise Organozinnverbindungen geeignet.

Das Verhältnis an funktionellen Gruppen des Polymerisates (A) zu den funktionellen Vinylmonomeren (B) beträgt vorzugsweise 0,7 : 1 bis 1,3 : 1, bevorzugt 0,8 : 1 bis 1,2 . 1 und ganz besonders bevorzugt 1 : 1.

Ein Überschuß an funktionellen Gruppen am Polymerisat (A) kann der Abwandlung der Eigenschaften des vernetzten Polymeren dienen, etwa um es weniger elektrostatisch aufladbar zu machen. Solche freien Gruppen sind insbesondere die Carboxylgruppe, die Hydroxylgruppe und die Carbonamidgruppe.

Die im Überschuß eingesetzten oder nicht abreagierten Monomeren (B) werden üblicherweise im Extruder durch Entgasung wieder entfernt.

Um eine zu früh einsetzende thermische Vernetzung zu vermeiden, kann es sich empfehlen, den Polymerisaten (A) vor der polymeranalogen Umsetzung Inhibitoren in Mengen von 1 bis 5000 ppm, bevorzugt von 1 bis 1000 zuzusetzen. Geeignete Inhibitoren sind z.B. Phenylthiazine, sterisch gehinderte o-Phenole oder Halbether des Hydrochinons.

Die Copolymerisate sind bereits in dieser Form handelsfähig. Meistens überführt man sie durch Lösen oder Dispergieren in eine gebrauchsfertige Zubereitung.

Es handelt sich bei den Dispersionen oder Lösungen vorzugsweise um solche mit hohem Feststoffgehalt, vorzugsweise mit mindestens 50, besonders bevorzugt mindestens 60 und ganz besonders bevorzugt mindestens 70 Gew.-% Polymer, bezogen auf die Lösung der Dispersion.

Entsprechend dem Hauptanwendungsgebiet als Bindemittel für die Pulverlackbeschichtung werden die Copolymerisate jedoch vorzugsweise, gewünschtenfalls zusammen mit Zusatzstoffen wie Pigmenten, Vernetzungskatalysatoren, Stabilisatoren, Mattierungsmitteln und Verlaufshilfsmitteln in an sich bekannter Weise zu Pulvern des mittleren Teilchendurchmessers von 10 bis 100 µm getrocknet.

Als Vernetzungskatalysatoren werden die üblichen Photoinitiatoren wie Benzoinether, Benzophenone, Benzoinphosphinoxide und Thioxanthone eingesetzt.

Die Pulver aus den Copolymerisaten zeichnen sich, wie es in der Regel erwünscht ist, durch eine relativ niedrige Filmbildungstemperatur aus, die aber deutlich über der maximalen Lagertemperatur liegt. Stellt man die Copolymerisate auf eine höhere oder geringere Filmbildungstemperatur ein, so erhöht oder erniedrigt sich auch die maximale Lagertemperatur.

Auf Grund der engen Molekulargewichtsverteilung ist das Temperaturintervall, in welchem die radikalisch vernetzbaren Polymer-Pulver in einen fließfähigen Zustand mit guten Verfilmungseigenschaften übergehen, besonders eng. Es gelingt hierdurch, die Differenz zwischen maximaler Lagertemperatur und Mindestfilmbildetemperatur (Verarbeitungstemperatur) besonders niedrig zu halten. Dies bietet gegenüber Systemen des Standes der Technik entweder den Vorteil, die Verarbeitungstemperatur weiter absenken zu können, ohne eine niedrigere maximale Lagertemperaturen in Kauf nehmen zu müssen oder umgekehrt die maximale Lagertemperatur der Pulver weiter anheben zu können, ohne die Mindestfilmbildetemperaturen, d.h. die Verarbeitungstemperaturen, zu erhöhen.

In der Praxis erfolgt die Verfilmung und die UV-Bestrahlung mittels dem Fachmann bekannter üblicher Verfahren in Abhängigkeit vom Anwendungsgebiet bei 70 bis 150°C, in den meisten Fällen jedoch bei 90 bis 130°C. Hierzu werden solche Polymerisate ausgewählt, deren Glasübergangsbereiche T_{G} in der Nähe der gewünschten Verarbeitungstemperatur liegen.

Die maximalen Lagertemperaturen, die bei den jeweiligen Polymer-Pulvern beachtet werden müssen, liegen in der Regel bei 40 bis 50°C.

Die Polymerisate können durch Selbstvernetzung oder durch Mitverwendung eines Co-Vernetzers ausgehärtet werden. Beispiele für Co-Vernetzer sind Verbindungen, die durch Kondensation von Methacryl- oder Acrylsäure mit hydroxyalkylierten Triaminotriazinen hergestellt werden. Bevorzugte Co-Vernetzer sind ebenso die Addukte von Triglycidylisocyanurat mit Acrylsäure.

Die Polymerisate dienen als Beschichtungsmittel für beliebige Untergründe, wie Metall, Holz, Spanplatten oder Kunststoffe. Besonders geeignet sind die Verbindungen als unpigmentierter Decklack bei der Autokarosseriebeschichtung.

### Beispiele

### A. Herstellung von Copolymerisaten (A)

### Beispiel 1a

In einen 5-l-Reaktor wurde bei 170°C zu einer Vorlage aus 600 g Isopropanol während 1 Stunde kontinuierlich eine Mischung aus 750 g Glycidylmethacrylat, 330 g Styrol, 486 g Methylacrylat, 1434 g Methylmethacrylat und 58,3 g Di-tert.-butylperoxid gegeben. Anschließend wurde eine Lösung von 4 g Di-tert.-butyl-peroxid in 150 g Isopropanol zugesetzt, und es wurde noch weitere 15 Minuten polymerisiert, wonach die Polymerisation durch Abkühlen auf Raumtemperatur abgebrochen wurde. Die Polymerisatlösung wurde mit Xylol auf die anderthalbfache Menge verdünnt, filtriert und in einem Dünnschichtverdampfer bei 210°C und einem Druck von 1 mbar von flüchtigen Bestandteilen befreit.

Es wurden 1254 g eines Copolymerisates (A/1) erhalten, das eine Glasübergangstemperatur T_{G} von 42°C, einen Erweichungspunkt von 84°C, ein zahlenmittleres Molekulargewicht von 1800, eine Polydispersität von 2,1 und einen Epoxydgehalt von 1,54 Epoxydmilliäquivalenten pro g (vgl. Ullmanns Encyclopädie der technischen Chemie, Band 8, 3. Auflage von 1957, Seite 436) aufweist. Der Feststoffgehalt betrug 99,2% und wurde ermittelt, indem eine Probe des Copolymerisates 20 Minuten bei 200°C getrocknet wurde.

### Beispiel 2a

Eine Mischung aus 600 g Isopropanol, 750 g Glycidylmethacrylat, 320 g Hydroxyethylacrylat, 390 g Styrol, 1440 g Methylmethacrylat und 55,5 g Di-tert.-butylperoxid wurde, wie in Beispiel 1 beschrieben, copolymerisiert und aufgearbeitet.

Das erhaltene Copolymerisat (A/2) hatte eine Glasübergangstemperatur T_{G} von 42°C, einen Erweichungspunkt von 85°C, ein zahlenmittleres Molekulargewicht von 1500, eine Polydispersität von 2,3 und einen Epoxydgehalt von 1,44 Epoxydmilliäguivalenten pro g. Der Feststoffgehalt betrug 98,7%.

### B. Polymeranaloge Umsetzung

### Beispiel 1b

In einem zweiwelligen Schneckenextruder (Typ ZSK der Fa. Werner und Pfleiderer) mit gleichlaufenden Schneckenwellen eines Nenndurchmessers von 30 mm und einem Länge/Durchmesser-Verhältnis von 33:1 wurden pro Stunde 2065 g einer Mischung, bestehend aus 96,8 Gew.-% des gemahlenen Copolymerisates (A/1), 1,1 Gew.-% 2,4,6-Trimethylbenzoyldiphenylphosphin und 2,1 Gew.-% Triphenylphosphin, mit 180 g Acrylsäure, die mit 100 ppm Phenothiazin stabilisiert war, bei 130°C und einer mittleren Verweilzeit von 7 Minuten umgesetzt.

Das erhaltene radikalisch vernetzbare Copolymerisat hatte eine Glasübergangstemperatur T_{G} von 36°C, einen Erweichungspunkt von 71°C, ein zahlenmittleres Molekulargewicht von 1900, eine Polydispersität von 2,5, einen Epoxydgehalt von 0,14 Epoxydmilliäquivalenten pro g, eine Säurezahl von 3,8 und eine Iodzahl von 24.

### Beispiel 2b

Dieser Versuch unterschied sich von Beispiel 1 darin, daß pro Stunde 2065 g einer Mischung, bestehend aus 96,8 Gew.-% des gemahlenen Copolymerisates (A/2), 1,1 Gew.-% 2,4,6-Trimethylbenzoyldiphenylphosphin und 2,1 Gew.-% Triphenylphosphin, mit 190 g Acrylsäure polymeranalog umgesetzt wurden.

Das erhaltene radikalisch vernetzbare Copolymerisat hatte eine Glasübergangstemperatur T_{G} von 17°C, einen Erweichungspunkt von 66°C, ein zahlenmittleres Molekulargewicht von 1400, eine Polydispersität von 2,0 und einen Epoxydgehalt von 0,19 Epoxydmilliäquivalenten pro g, eine Säurezahl von 3,5 und eine Iodzahl von 21.

### Herstellung der Pulverlackbeschichtungen

Eine Siebfraktion eines gemahlenen radikalisch vernetzbaren Copolymerisates mit einem Teilchengrößendurchmesser von weniger als 100 µm wurde auf phosphatierte Stahlbleche aufgetragen, 10 Minuten (radikalisch vernetzbares Copolymerisat hergestellt nach Beispiel 1b) bzw. 15 Minuten (radikalisch vernetzbares Copolymerisat hergestellt nach Beispiel 2b) bei 120°C in einem Umlufttrockenschrank getempert und nach dieser Zeit 2 mal mit einer 120 Watt UV-Lampe der Fa. IST bestrahlt. Es wurde eine 50 µm dicke acetonfeste Beschichtung erhalten.

## Patentansprüche

1. Verfahren zur Herstellung von Pulvern für Überzüge, welche durch UV-Strahlen gehärtet werden, aus radikalisch vernetzbaren Copolymerisaten mit einem zahlenmittleren Molekulargewicht von 1500 bis 6000 und einer Molekulargewichtsverteilung entsprechend einer Polydispersität von 1 bis 4,0, **dadurch gekennzeichnet, daß**
A) ein Copolymerisat (A), welches aus
a1) 50 bis 85 mol-% eines Monomeren (a1) mit dem Strukturelement der Methacrylsäure und
a2) 15 bis 50 mol-% eines sonstigen radikalisch polymerisierenden Monomeren (a2), wobei
a3) 5 bis 50 mol-% der Gesamtmenge der Monomeren (a1) und (a2) funktionelle Gruppen tragende Monomeren (a3) sind, deren funktionelle Gruppen zu einer Kondensations- oder Additionsreaktion befähigt sind,
aufgebaut ist, durch radikalische Substanz- oder Lösungspolymerisation bei 140 bis 210°C und einer mittleren Verweilzeit von 2 bis 90 min hergestellt wird und
mit
B) einem olefinisch ungesättigten Monomeren (B), welches eine funktionelle Gruppe trägt, die zu der der Monomeren (a3) komplementär ist, polymeranalog umgesetzt wird.

2. Verfahren gemäß Anspruch 1, **dadurch gekennzeichnet, daß** das Copolymerisat aufgebaut ist aus
60 bis 70 mol-% der Monomeren (a1)
15 bis 25 mol-% der Monomeren (a2)
15 bis 25 mol-% der Monomeren (a3).

## Claims

1. A process for the preparation of powders for coatings which are cured by UV radiation, from copolymers capable of free radical crosslinking and having a number average molecular weight of from 1 500 to 6 000 and a molecular weight distribution corresponding to a polydispersity of from 1 to 4.0, wherein
A) a copolymer (A) which is composed of
a1) from 50 to 85 mol% of a monomer (a1) having the structural element of methacrylic acid and
a2) from 15 to 50 mol% of another monomer (a2) undergoing free radical polymerization,
a3) from 5 to 50 mol% of the total amount of the monomers (a1) and (a2) being monomers (a3) which carry functional groups and their functional groups are capable of condensation or addition reaction,
is prepared by free radical mass or solution polymerization at from 140 to 210°C and during an average residence time of from 2 to 90 minutes and is subjected to a polymer-analogous reaction
with
B) an olefinically unsaturated monomer (B) which carries a functional group which is complementary to that of the monomers (a3).

2. A process as claimed in claim 1, wherein the copolymer is composed of
from 60 to 70 mol% of the monomers (a1)
from 15 to 25 mol% of the monomers (a2)
from 15 to 25 mol% of the monomers (a3).

## Revendications

1. Procédé de préparation de poudres pour revêtements, qui sont durcis par des rayons UV, à partir de copolymères réticulables par voie radicalaire, ayant une masse moléculaire moyenne en nombre de 1500 à 6000 et une répartition des masses moléculaires correspondant à une polydispersité de 1 à 4,0, **caractérisé en ce que**
A) on prépare un copolymère (A), qui est constitué
a1) de 50 à 85 % en moles d'un monomère (a1) ayant l'élément structural de l'acide méthacrylique, et
a2) de 15 à 50 % en moles d'un autre monomère (a2) polymérisable par voie radicalaire, où
a3) de 5 à 50 % en moles de la quantité totale des monomères (a1) et (a2) sont des monomères (a3) portant des groupes fonctionnels, dont les groupes fonctionnels sont à même de subir une réaction de condensation ou d'addition,
par polymérisation radicalaire, en masse ou en solution, à une température de 140 à 210°C et pendant un temps de séjour moyen de 2 à 90 min, et
B) on le fait réagir à la manière d'une polymisation avec un monomère à insaturation oléfinique (B), qui porte un groupe fonctionnel complémentaire de celui des monomères (a3).

2. Procédé selon la revendication 1, **caractérisé en ce que** le copolymère est constitué
de 60 à 70 % en moles des monomères (a1)
de 15 à 25 % en moles des monomères (a2)
de 15 à 25 % en moles des monomères (a3).
